# EUROPEAN PATENT SPECIFICATION

(11) **EP 1 321 325 B1**
(45) Date of publication and mention of the grant of the patent: **28.04.2004**
(21) Application number: 01130084.5
(22) Date of filing: 18.12.2001
(51) Int. Cl.: B60J 10/00, B60J 10/08

(54) **Weather strip and mounting structure thereof**
Dichtungsprofil und zugehörige Montagestruktur
Joint d'étanchéité et structure de montage correspondante

(43) Date of publication of application: 25.06.2003
(73) Proprietor: TOYO TIRE & RUBBER CO., LTD ., Osaka (JP)
(72) Inventor: Masuda, Hiroyuki, c/o Toyo Tire & Rubber Co. Ltd., Osaka (JP); Maekawa, Hiroshi, c/o Toyo Tire & Rubber Co. Ltd., Osaka (JP)
(74) Representative: Leson, Thomas Johannes Alois, Dipl.-Ing.

(56) References cited:
- EP-A- 1 078 800
- EP-A- 1 078 801
- DE-A- 4 236 817
- PATENT ABSTRACTS OF JAPAN vol. 1997, no. 09, 30 September 1997 (1997-09-30) & JP 09 123760 A (TOYODA GOSEI CO LTD), 13 May 1997 (1997-05-13)

## Description

This invention relates to a weather strip according to the preamble of claim 1, adapted to be installed to a periphery of a door or an opening periphery of a vehicle body with clips and a double-sided adhesive tape, and a vehicle wherein the weather strip is mounted.

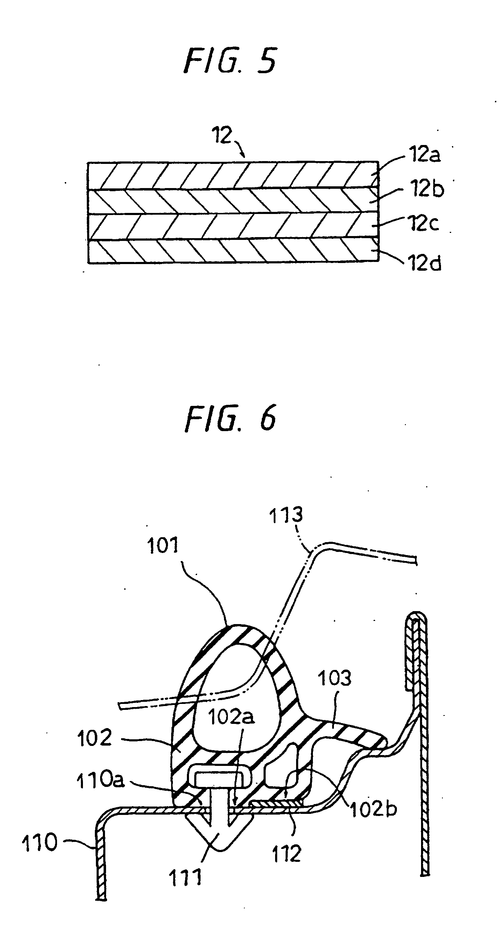

In mounting or installing a weather strip for an automotive vehicle or the like, with which to seal between a periphery of a door and a periphery of a door aperture of a vehicle body, to the door or the vehicle body, a structure that avails itself of clips and a double-sided adhesive tape in combination is known in the art. For example, JP Patent 9-123760(1997) A discloses such a structure of weather strip installed as shown in Fig. 6. This is contemplated enhancing a faying ability in mounting the weather strip on a door frame by the conjoint use of the clips and the double-sided adhesive tape.

The weather strip in Fig. 6 is adapted to be fitted to a mounting area 110a of the door frame 110 by means of the clips 111 and the double-sided adhesive tape 112. The weather strip is possessed of a hollow seal portion 101, an attachment base 102 and a seal lip 103, the attachment base 102 having a clip attachment face 102a, through which to fit the clips 111 and a tape attachment face 102b, to which the double-sided adhesive tape 112 is preliminarily applied. The hollow seal portion 101 is, when pressed by an opening periphery of a vehicle body 113, adapted to be deformed thereby exhibiting a sealing function.

However with the conventional weather strip as constructed above there were the following problems to be solved: That is, such a weather strip was fabricated into a complete product through the steps of inserting beforehand the clips 111 into the clip attachment face 102a of the weather strip, connecting it to molded portions to make a loop form, and bonding the double-sided adhesive tape 112 to the tape attachment face 102b. At that time, the clips 111 can be inserted with a machine. On the other hand, for the double-sided adhesive tape 112, a pressure-sensitive adhesive type one, which is applied at ordinary temperature by pressing to the weather strip, has been used so far. Consequently, it was pressed to be sticked by manual working subsequently to degreasing the tape attachment portion 102b and coating of a primer. From the aspect of production efficiency as well, however, it is preferred the application process of the double side adhesive tape 112 be superseded by a machine.

Having recourse to a machine application, the use of a hot melt adhesive type of double-sided adhesive tape is conceivable. To that end, adhesive bonding is conducted by feeding a heated air of 200°C∼400°C to the tape attachment portion 102b of the weather strip and an adhesive layer of the double-sided adhesive tape 112 and while burning out or blowing away a dust or the like on the surface of the tape attachment portion 102b, melting the adhesive layer and pressing with a roller.

With the conventional weather strip described above, however, the clip attachment portion 102a and the tape attachment portion 102b are adjacent to each other and mutually in a parallel plane (or in the same plane or substantially same plane), so that the clips 111 made of nylon or polyacetal resin will be melted out by the heated air. In order to cope with this difficulty, it would be better to space the clip attachment portion 102a apart a distance from the tape attachment portion 102b, but this will result in a larger sectional shape of the weather strip to the extent that requires a larger size for the vehicle body side, which is responsible for disadvantageous cost increase.

Document JP 09123760 discloses a weather strip intended for a door of a vehicle and able to be fitted to a periphery of a door. The weather strip comprises a seal portion projecting from an attachment base and adapted to be compressed between the door and the vehicle body when the door is closed. The attachment base includes a first attachment face to be fitted to the door or the vehicle body by means of clips, and a second attachment face to be fitted to the door or the vehicle body with a double-sided adhesive tape.

The object underlying the invention is to provide a weather strip of the known type using clips and a double-sided adhesive tape enabling a simple and fast mounting of the weather strip on the one hand, and on the other hand a reliable function of the weather strip, even over longer period of use. This object is solved by the features of claim 1.

This invention meeting the aforesaid object relates to a weather strip provided with an attachment base, adapted to be fitted to a periphery of a door or an opening periphery of a vehicle body, and a seal portion projecting from the attachment base and adapted to be compressed between the door and the vehicle body when the door is closed. The attachment base includes a first attachment face to be fitted to the door or the vehicle body by means of clips and a second attachment face to be fitted to the door or the vehicle body with a double-sided adhesive tape. The weather strip is characterised in that the second attachment face is formed to slant at a predetermined angle to the first attachment face.

According to this constitution, the first attachment face and the second attachment face are not in parallel to each other, but in a slanting relation at a predetermined angle. Therefore, even if a heated air is supplied to the second attachment face in order to apply a double-sided adhesive tape, it little affects adversely the first attachment face, so that the clips are not melted out by the heated air. As a consequence, such a weather strip can be provided that falls under a type using both clips and a double-sided adhesive tape, yet is constructed so that the double-sided tape is applicable with a machine.

In a preferred embodiment of the invention, the aforesaid predetermined angle is at least 15 degrees and up to 75 degrees. On that account, it is possible to solve the problems of this invention without impairing the installing ability of the weather strip to the door or vehicle body and to contribute to the weight reduction of the door or vehicle body, as well.

A mounting structure of weather strip relating to this invention for solving the problems comprises a weather strip provided with an attachment base fitted to a periphery of a door or an opening periphery of a vehicle body and a seal portion projecting from the attachment base and adapted to be compressed between the door and the vehicle body when the door is closed, the attachment base including a first attachment face and a second . attachment face; and a first mounting area where the first attachment face is attached and a second mounting area where the second attachment face is attached, both areas being located on the periphery of the door or the opening periphery of the vehicle body, wherein the second mounting area slants at a predetermined angle to the first mounting area, the first attachment face is fitted to the first mounting area by means of clips, the second attachment face is fitted to the second mounting area with a double-sided adhesive tape.

In the weather strip used for this mounting structure of weather strip, the first attachment face and the second attachment face are not in parallel to each other, but in a slanting relation at a predetermined angle. Consequently, even if a heated air is supplied to the second attachment face to apply the double-sided adhesive tape, the first attachment face is little affected thereby and the clips are never melted out, either. As a result, it is possible to provide a weather strip-mounted structure constructed so that the double-sided adhesive tape is applicable with a machine.

Preferred embodiments of this invention will be hereinafter described by way of example in more detail with reference to the accompanying drawings, in which:
Fig. 1 is a sectional view showing a constitution of one embodiment of a weather strip pertaining to this invention;
Fig. 2 is a sectional view taken along A-A line in Fig. 3 showing a mounting structure of the weather strip in Fig. 1;
Fig. 3 is an illustration showing an automotive vehicle to which the weather strip in Fig. 1 is installed;
Fig. 4 is a schematic view showing the construction of an example of a device for applying a double-sided adhesive tape;
Fig. 5 is a sectional view showing the construction of a double-sided adhesive tape; and
Fig. 6 is an illustration showing a mounting structure of a prior art weather strip.

### <One Embodiment>

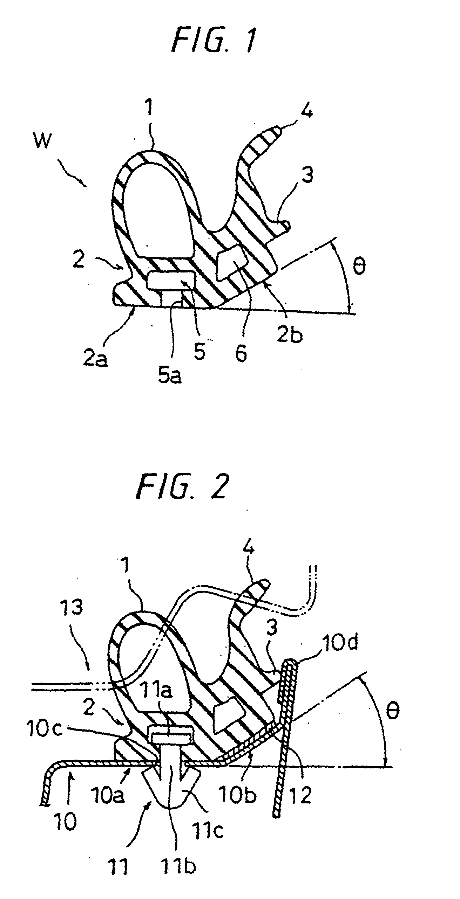

This weather strip W shown in Figs. 1 to 3 is provided with a hollow seal portion 1, an attachment base 2 adapted to be fitted to a door frame 10, a door side seal lip 3, a vehicle body side seal lip 4, a hollow space 5 for clips and a hollow part 6.

The hollow seal portion 1 projects from the attachment base 2 and is forced toward an opening periphery 13 of vehicle body when the door is closed to be deformed thus exhibiting a seal function. The attachment base 2 includes a first attachment face (clip attachment face) 2a to be fitted to a first mounting area 10a of the door frame 10 and a second attachment face 2b to be fitted to a second mounting area 10b. The first attachment face 2a and the second attachment face 2b are formed to be adjacent to each other, and more specifically, the second attachment face 2b is provided adjacent to the first attachment face 2a on the external vehicle side. And the second attachment face 2b slants upwardly, namely toward the vehicle body side by an angle of θ to the first attachment face 2a, whereby the fitting surface of the attachment base 2 to the door frame is angular-shaped in cross-section, having both side slopes of the first attachment face 2a and the second attachment face 2b.

In conformity with this slanting, the second mounting area 10b of the door frame 10 slants toward the vehicle body side by the same angle θ to the first mounting area.

A preferred value of the angle θ is in the range of 15 to 75 degrees, more preferably 30 to 60 degrees. Thereby it is possible to ensure the installing ability of the weather strip W to the door frame 10. Further it is possible to shortcut the first mounting area 10a of the door frame 10 and the flange 10d vertical thereto through the second mounting area 10b in the form of a slanting plane, so that the door frame 10 is made lightweight by that part. Here, the flange 10d is provided so as to project upwardly, namely toward the vehicle body side at the edge of the exterior vehicle side.

Upwardly of the first attachment face 2a there is formed the hollow space 5, in which to insert a head portion 11a of clips 11. The shape of the clip 11 is as shown in Fig. 2 and it has the head portion 11a, a shaft portion 11b with a smaller diameter than the head portion 11a, and a claw-like lock portion 11c at the top of the shaft portion 11b. Further upwards of the hollow space 5 for clips there is formed a hollow seal portion 1.

The clips 11 can be fitted each to the weather strip W by inserting the head portion 11a through a shaft hole 5a located below the hollow space 5. A multiplicity of clips 11 are fitted at predetermined positions of the weather strip W along its elongate direction. The clip 11 is made of a synthetic resin such as nylon, polyacetal, etc., and the lock portion 11c serves to elastically deform by being inserted into a hole 10c defined in the door frame 10, so that the clip can be fitted to the door frame 10.

The constitution of the double-sided adhesive tape 12 will be described referring to Fig. 5. In this example, the double-sided adhesive tape 12 is a hot melt adhesive type tape that is sticked to the second attachment face 2b by hot melting and of a four-layer structure constructed of a liner 12a (mold release paper), a first adhesive layer 12b, an acrylic foam tape 12c, and a second adhesive layer 12d, in this order. The second adhesive layer 12d is to be applied to the second attachment face 2b. Prior to installing the weather strip W to the door frame 10, the weather strip W and the double-sided adhesive tape 12 are preliminarily integrated. Upon mounting on the door frame 10 (applying the tape), the liner 12a is detached and the first adhesive layer 12b is applied and sticked to the door frame 10.

The thickness of the double-sided adhesive tape 12 is in the range of about 0.6 ∼ 1.2 mm, preferably in the vicinity of 0.8 mm. The structure of the double-sided adhesive tape 12 is, of course, not limited to that of Fig. 6, but another one can be appropriately adopted within the scope of this invention.

The door side seal lip 3 serves to assure a sealing property by abutting on the door frame 10. The vehicle body side seal lip 4 abuts on the opening periphery of vehicle body 13 to ensure a sealing property.

### <Applicator of Double-Sided Adhesive Tape>

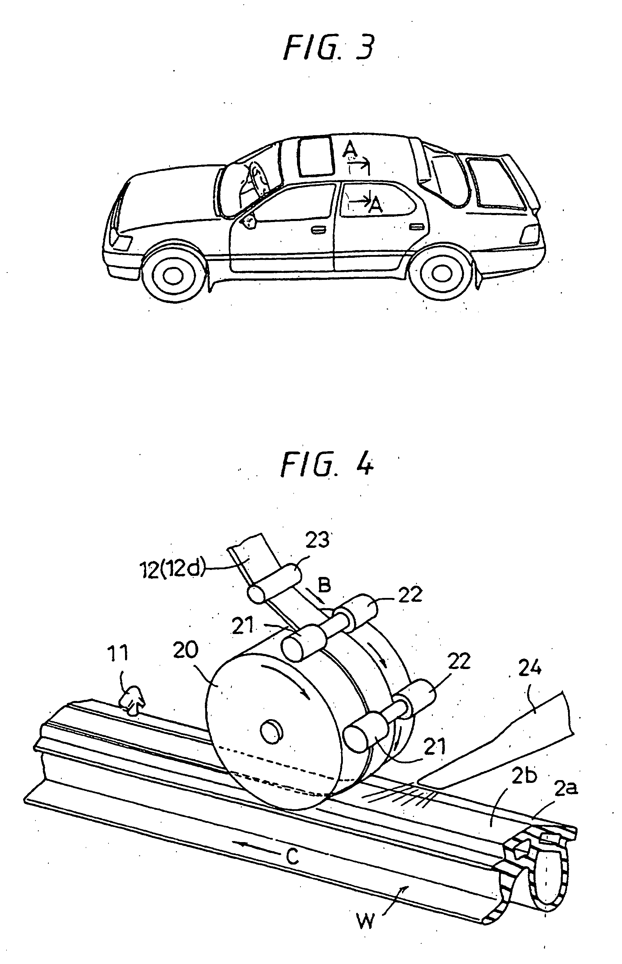

Fig. 4 is a schematic view showing the construction of an application device for bonding a double-sided adhesive tape to a weather strip. After the weather strip W is extrusion molded by means of a molding unit not shown, the clips 11 are automatically inserted, connected to the molded portion and made into a loop form. Then the weather strip is set on the applicator and conveyed in an elongate direction (arrow direction C) with the aid of a conveying mechanism. Above the conveying path the applicator is provided with a cooling and press-bonding roller 20 of a large-diameter, small-diameter guide rollers 21, 22 circumscribing the roller 20, a feed roller 23, and a jet heater 24 for supplying hot air (heating means).

The double-sided adhesive tape 12 is supplied from a roll (not shown) wound up on a reel in an arrow direction B in the state that it is pinched widthwise between edge portions of the guide rollers 21, 22. The jet heater 24 feeds a heated air of 200 to 400°C to the second attachment face 2b of the weather strip and to the second adhesive layer 12d of the double-sided adhesive tape, and burns out or blows away a dust on the surface of the second attachment face 2b and melts the second adhesive layer 12d. The melted adhesive is bonded by pressing and applying the cooling and press-bonding roller 20 to the second attachment face.

Because the first attachment face 2a and the second attachment face 2b slant by the predetermined angle θ, even if heated air is supplied to the second attachment face 2b, its influence on the first attachment face 2a is so slight that the clips 11 do not melt out. Thus there is no problem in that the clips 11 beforehand remain fitted to the first attachment face 2a. Therefore, it is possible to automate the process comprising extrusion molding the weather strip, fitting the clips, connecting them to the molded piece to make a loop form, and applying the double-sided adhesive tape on a machine. Further, the degreasing and primer coating step before applying the double-sided adhesive tape is no longer necessitated, contributing to a further cost cutting in this respect. In addition, the first attachment face 2a and the second attachment face 2b slant to each other, so that the liner 12a is readily separated even in the state that the weather strip is temporarily fastened to the door frame 10 with the clips 11 and the workability is enhanced.

### <Another Embodiments>

The weather strip of this invention is not limited to the shapes described in the embodiments above, but it is possible to vary and modify appropriately the invention without departing from the scope of the invention.

The first attachment face 2a and the second attachment face 2b are not required to be plane, but may be formed in a curved face.

## Claims

1. A weather strip (W) provided with an attachment base (2), adapted to be fitted to a periphery of a door (10) or an opening periphery of a vehicle body (13), and a seal portion (1) projecting from the attachment base and adapted to be compressed between the door and the vehicle body when the door is closed,
wherein the attachment base (2) includes a first attachment face (2a) to be fitted to the door or the vehicle body by means of clips (11) and a second attachment face (2b) to be fitted to the door or the vehicle body with a double-sided adhesive tape (12);
**characterized in that** said second attachment face (2b) is formed to slant at a predetermined angle (θ) to said first attachment face (2a).

2. The weather strip according to claim 1, wherein the predetermined angle (θ) is at least 15 degrees and up to 75 degrees.

3. The weather strip according to claim 1 or 2,
wherein the double-sided adhesive tape (12) is bonded to the second attachment face by hot melting.

4. A vehicle provided with a weather strip (W) according to claims 1 to 3,
wherein the vehicle includes a first mounting area (10a) to which the first attachment face (2a) is attached and a second mounting area (10b) to which the second attachment face (2b) is attached, both mounting areas being located at the periphery of the door (10) or the opening periphery of the vehicle body (13);
wherein said first attachment face (2a) is fitted to said first mounting area (10a) by means of the clips (11), and said second attachment face (2b) is fitted to said second mounting area (10b) with the double-sided adhesive tape (12) wherein said second mounting area (10b) slants at a predetermined angle (θ) to said first mounting area (10a), and said first attachment face (2a) and said second attachment face (2b) are in a slanting relation.

## Patentansprüche

1. Dichtungsstreifen (W), der mit einer Befestigungsbasis (2) versehen ist, die geeignet ist, um an einen Umfang einer Tür (10) oder einen Öffnungsumfang einer Fahrzeugkarosserie (13) angepasst zu werden, und einem Dichtungsabschnitt (1), der von der Befestigungsbasis vorsteht und geeignet ist, um zwischen der Tür und der Fahrzeugkarosserie komprimiert zu werden, wenn die Tür geschlossen ist,
wobei die Befestigungsbasis (2) eine erste Befestigungsfläche (2a), die an die Tür oder die Fahrzeugkarosserie mittels Klammern (11) anzupassen ist, und eine zweite Befestigungsfläche (2b) aufweist, die an die Tür oder die Fahrzeugkarosserie mit einem doppelseitigen Klebeband (12) anzupassen ist;
**dadurch gekennzeichnet, dass**
die zweite Befestigungsfläche (2b) so ausgebildet ist, dass sie sich mit einem vorbestimmten Winkel (θ) zu der ersten Befestigungsfläche (2a) neigt.

2. Dichtungsstreifen gemäß Anspruch 1, wobei der vorbestimmte Winkel (θ) zumindest 15 Grad und bis zu 75 Grad beträgt.

3. Dichtungsstreifen gemäß Anspruch 1 oder 2, wobei das doppelseitige Klebeband (12) durch Heißschmelzen an die zweite Befestigungsfläche gefügt ist.

4. Fahrzeug, das mit einem Dichtungsstreifen (W) gemäß den Ansprüchen 1 bis 3 versehen ist, wobei das Fahrzeug einen ersten Montierbereich (10a), an den die erste Befestigungsfläche (2a) angebracht ist, und einen zweiten Montierbereich (10b) aufweist, an den die zweite Befestigungsfläche (2b) angebracht ist, wobei beide Montierbereiche an dem Umfang der Tür (10) oder dem Öffnungsumfang der Fahrzeugkarosserie (13) gelegen sind;
wobei die erste Befestigungsfläche (2a) an den ersten Montierbereich (10a) mittels der Klammern (11) angepasst ist und wobei die zweite Befestigungsfläche (2b) an den zweiten Montierbereich (10b) mit dem doppelseitigen Klebeband (12) angepasst ist, wobei der zweite Montierbereich (10b) sich mit einem vorbestimmten Winkel (θ) zu dem ersten Montierbereich (10a neigt, und wobei die erste Befestigungsfläche (2a) und die zweite Befestigungsfläche (2b) sich in einer geneigten Beziehung befinden.

## Revendications

1. Profilé d'étanchéité (W) muni d'un socle de fixation (2), adapté pour être ajusté à la périphérie d'une porte (10) ou à la périphérie d'ouverture d'une carrosserie de véhicule (13), et une partie de joint (1) se projetant à partir du socle de fixation et adaptée pour être comprimée entre la porte et la carrosserie du véhicule lorsque la porte est fermée, dans lequel le socle de fixation (2) comprend une première face d'appui (2a) à ajuster à la porte ou à la carrosserie du véhicule au moyen d'attaches (11) et une seconde face d'appui (2b) à ajuster à la porte ou à la carrosserie du véhicule avec un adhésif double face (12) ; **caractérisé en ce que** ladite seconde face d'appui (2b) est formée pour obliquer à un angle prédéterminé (θ) par rapport à ladite première face d'appui (2a).

2. Profilé d'étanchéité selon la revendication 1, dans lequel l'angle prédéterminé (θ) est d'au moins 15 degrés et va jusqu'à 75 degrés.

3. Profilé d'étanchéité selon la revendication 1 ou 2, dans lequel l'adhésif double face (12) est collé sur la seconde face d'appui par thermo-enduction.

4. Véhicule muni d'un profilé d'étanchéité (W) selon les revendications 1 à 3, dans lequel le véhicule comprend une première zone de support (10a) à laquelle la première face d'appui (2a) est fixée et une seconde zone de support (10b) à laquelle la seconde face d'appui (2b) est fixée, les deux zones de support étant situées à la périphérie de la porte (10) ou à la périphérie d'ouverture de la carrosserie du véhicule (13) ; dans lequel ladite première face d'appui (2a) est ajustée à ladite première zone de support (10a) au moyen d'attaches (11), et ladite seconde face d'appui (2b) est ajustée à ladite seconde zone de support (10b) avec l'adhésif double face (12), dans lequel ladite seconde zone de support (10b) oblique à un angle prédéterminé (θ) par rapport à ladite première zone de support (10a), et ladite première face d'appui (2a) et ladite seconde face d'appui (2b) sont en relation oblique.
